# EUROPEAN PATENT APPLICATION

(11) **EP 2 272 807 A1**
(43) Date of publication of application: **12.01.2011**
(21) Application number: 09727563.0
(22) Date of filing: 24.03.2009
(51) Int. Cl.: C03B 11/06, C03B 11/00, B29C 33/38

(54) **DIE ASSEMBLY AND MOLDING METHOD**

(30) Priority: 31.03.2008 JP 2008090666
(71) Applicant: Sumitomo Electric Industries, Ltd., Chuo-ku Osaka-shi Osaka 541-0041 (JP)
(72) Inventor: UENO, Tomoyuki, Itami-shi Hyogo 664-0016 (JP); HASEGAWA, Masato, Itami-shi Hyogo 664-0016 (JP); TERAOKA, Kanji, Osaka-shi Osaka 554-0024 (JP)
(74) Representative: Setna, Rohan P.
(86) International application number: PCT/JP2009/055798
(87) International publication number: WO 2009/122965

(57) **Abstract**

A die assembly includes a barrel die (4) having a tubular inner face, a sleeve (5) covering an outer peripheral surface of the barrel die, and a pair of core dies (1, 2) for pressing a preform inside the tubular inner surface of the barrel die. At least one of the paired core dies (1, 2) is slidable and guided along the tubular inner surface of the barrel die (4). The sleeve (5) does not transmit light having a wavelength of 5 µm or shorter and has a thermal conductivity of 70 W/m·K or greater.

## Description

### TECHNICAL FIELD

The present invention, rebates to a die assembly for shaping and/or sintering a preform and also relates to a shaping method using the die assembly.

### BACKGROUND ART

Patent Document 1 of Japanese Patent Laying-Open No. 2004-090326 discloses an example of a die assembly used in producing a shaped product of a material such as glass or resin.

Fig. 3 is a schematic sectional view of the die assembly disclosed in Patent Document 1. In this die assembly 10, a barrel die 13 having a cylindrical inner surface is put on a base die 31. Barrel die 13 is formed of transparent quartz glass. The outer periphery of barrel die 13 is surrounded with an annular halogen lamp (not shown) that is used as a heat source.

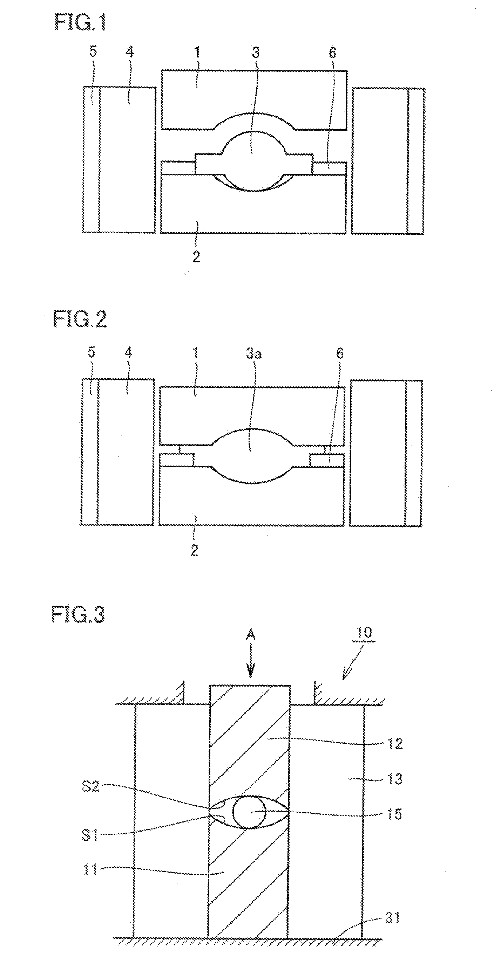

A lower core die 11 and an upper core die 12 are inserted inside the cylindrical inner surface of barrel die 13. This pair of core dies 11 and 12 is formed of opaque cemented carbide or opaque ceramic. A preform 15 such as of glass is placed between a pressing face 81 of lower core die 11 and a pressing face S2 of upper core die 12. In this state, light irradiation from the halogen lamp is carried out, and upper core die 12 is pressed towards lower core die 11, as indicated by an arrow A in Fig. 3.

In this case, infrared light and visible light emitted from the halogen lamp pass through barrel die 13 of quartz glass and then are absorbed by lower and upper core dies 11 and 12 of cemented carbide or ceramic so as to generate heat. As a result, preform 15 is heated being sandwiched between pressing faces S1 and S2 of paired core dies 11 and 12. By pressing upper core die 12 towards lower core die 11 as indicated by arrow A, heated preform 15 is shaped into a convex lens, for example, in conformity with pressing faces S1 and S2.

Patent Document 1 teaches that the usage of the die assembly as shown in Fig. 3 enables direct and rapid heating of core dies 11 and 12 and preform 15 without intervention of heating of barrel die 13, heading to a shorter shaping cycle.

Patent Document 1 Japanese Patent Laying-Open No. 2004-090326

### DISCLOSURE OF THE INVENTION

### PROBLEMS TO BE SOLVED BY THE INVENTION

As a result of the present inventors' detailed study regarding the die assembly as shown in Fig. 3, it was found that there is a problem as follows.

Specifically, such too local and too rapid heating as disclosed in Patent Document 1 is liable to cause thermal nonuniformity in preform 15. Such thermal nonuniformity may become a cause of inhomogeneity in a shaped product obtained from preform 15

In view of the above problem found by the present inventors regarding the die assembly as shown in Fig. 3, an object of the present invention is directed to improvement in a die assembly used for shaping and/or sintering and also to improvement in a shaping method using the die assembly.

### MEANS FOR SOLVING THE PROBLEMS

A die assembly according to the present invention includes a barrel die having a tubular inner surface, a sleeve covering an outer peripheral surface of the barrel die, and a pair of core dies for pressing a preform inside the tubular inner surface of the barrel die At least one of the paired core dies is slidable and guided along the tubular inner surface of the barrel die. The sleeve does not transmit light having a wavelength of 5 µm or shorter and has a thermal conductivity of 70 W/m·K or greater.

Such a sleeve is preferably formed mainly of any of graphite, SiC, and AIN.

The barrel die has a cylindrical inner surface of D₁ (mm) in diameter, and the core die has a cylindrical outer peripheral surface of D₂ (mm) in diameter. Thermal expansion coefficients of the barrel die and core die at a temperature T (°C) at which the preform is pressed are α₁ (/°C) and α₂ (/°C), respectively. Preferably, relationships of α₁ < α₂ and 0030 ≥ (α₁D₁- α₂D₂)·ΔT + (D₁ - D₂) ≥ 0.005 are satisfied, where ΔT is a difference between the pressing temperature T (°C) and a room temperature (°C).

The die assembly may further include a frame die for surrounding a rim of the preform inside the tubular inner surface of the barrel die. In this case, the barrel die has a cylindrical inner surface of D₁ (mm) in diameter, and the frame die has a cylindrical outer peripheral surface of D₃ (mm) in diameter. Thermal expansion coefficients of the barrel die and frame die at a temperature T (°C) at which the preform is pressed are α₁ (/°C) and α₃ (/°C), respectively. Preferably, relationships of α₁ < α₃ and 0.150 ≥ (α₁D₁ -α₃D₃)-ΔT+ (D₁- D₃) ≥ 0.015 are satisfied, where ΔT is a difference the pressing temperature T (°C) and a room temperature (°C).

Preferably, the barrel die is formed mainly of a material having a thermal expansion coefficient less than or equal to 3.5 10⁻⁶. Such a barrel die maybe formed mainly of quartz glass or silicon nitride, for example.

The sliding surface of the core die may be formed of any of graphite, glassy carbon, DLC, and diamond. The frame die is preferably formed mainly of a ceramic material having bending strength of 300 MPa or greater. Such a frame die may be formed mainly of any of silicon carbide, silicon nitride, alumina, B₄C₇ and zirconia.

An edge formed by the sliding surface and the pressing face of the core die is preferably R-chamfered or C-chamfered by at least 0.2 mm.

In a shaping method for producing a shaped product by using the die assembly set forth above, it is preferable to heat the preform at a heating rate of 2 °C/sec or higher up to 85% of the temperature T °C at which the preform is pressed, and then heat the preform from 85% of the temperature T°C up to the T°C at a heating rate in a range of 0.20 °C/sec to 2 °C/see.

### ADVANTAGE OF THE INVENTION

Since the die assembly of the present invention has the outer peripheral surface of the barrel die covered with the sleeve that does not transmit light having a wavelength of 3 µm or shorter and that has the thermal conductivity of 70 W/m·K or greater, the thermal uniformity in the shaping region can be improved whereby making it possible to form a shaped product of high homogeneity.

### BRIEF DESCRIPTION OF THE DRAWINGS

Fig. 1 is a schematic sectional view illustrating a die assembly according to an embodiment of the present invention.
Fig. 2 is a schematic sectional view showing a state in which a shaped product has been formed from the preform with the die assembly of Fig. 1.
Fig. 3 is a schematic sectional view illustrating a die assembly disclosed in Patent Document 1.

### DESCRIPTION OF THE REFERENCE CHARACTERS

1 an upper core die; 2 a lower core die; 3 a preform; 3a a shaped product; 4a barrel die; 5 a sleeve, 6a frame die; 10 a die assembly of the prior art; 11 a lower core die; 12 an upper core die; 13 a barrel die; 15 a preform; 31 a base die; A a pressing direction; S1 a pressing face of the lower core die; S2 a pressing face of the upper core die.

### BEST MODES FOR CARRYING OUT THE INVENTION

Figs. 1 and 2 are schematic sectional views illustrating shaping by using a die assembly according to an embodiment of the present invention. The die assembly includes a barrel die 4 having a tubular inner surface as well as an upper core die 1 and a lower core die 2 for pressing a preform 3 inside the tubular inner surface of the barrel a die. The outer periphery of barrel die 4 is covered with a sleeve 5 formed of a material that does not transmit heating light. At least one of paired core dies 1 and 2 is slidable and guided along the tubular inner surface of barrel die 4. A frame die 6 may be disposed around preform 3. The cross section of the tubular inner surface of barrel die 4 may be circular, polygonal, or another arbitrary shape depending upon the object.

Barrel die 4 and sleeve 5 are surrounded by, e.g., an annular halogen lamp (not shown) used as a heat source.

Preform 3 as shown in Fig. 1 is pressed between paired core dies 1 and 2 at a temperate T °C, whereby a shaped product 3a is obtained as shown in Fig. 2 (hereinafter, T° C is referred to as "pressing temperature" or "shaping temperature"). For example, preform 3 of ZnS (zinc sulfide) powder can be shaped and sintered so as to obtain a shaped product 3a in a shape of a convex lens as a far-infrared optical element

As found by the inventors' above-mentioned study regarding the die assembly disclosed in Patent Document 1, the too local and too rapid heating is liable to cause thermal nonuniformity in preform 15 Such thermal nonuniformity may become a cause of inhomogeneity in the shaped product obtained from preform 15.

In view of this new knowledge found by the present inventors, they conceived of covering the outer peripheral surface of barrel die 4 in Figs. 1 and 2 with sleeve 5 that is opaque and has a good thermal conductivity, whereby the thermal uniformity at the shaping region can be improved by the sleeve.

Based on this new concept of the inventors, various examples of the present invention for producing a shaped product by using the die assembly illustrated in Figs. 1 and 2 will be described more specifically in the following.

### <Example 1>

In Example 1 of the present invention, barrel die 4 was made of quartz glass having a thermal expansion coefficient of 5.0×10⁻⁷ /°C. This barrel die 4 was formed to have a cylindrical inner surface of 19.995 mm in inner diameter. The outer periphery of barrel die 4 was covered with sleeve 5. The characteristics of sleeve 5 will be described later in detail in association with Table 1.

Paired core dies 1 and 2 were formed of glassy carbon having a thermal expansion coefficient of 2.8 × 10⁻⁶ /°C. The cylindrical outer peripheral surfaces of core dies 1 and 2 had an outer diameter of 19.944 mm.

Preform 3 of ZnS powder was disposed between paired core dies 1 and 2 Frame die 6 was disposed around preform 3. Frame die 6 was formed of Si₃N₄ having a thermal expansion coefficient of 3.5 × 10⁻⁶ /°C, bending strength of 700 MPa, and an outer diameter of 19.915 mm.

Preform 3 of ZnS powder located between paired core dies 1 and 2 was pressed under a pressure of 50 MPa at a temperature T °C = 1000°C to be shaped and sintered.

In Example 1, Experiments 1a to 1f were carried out. In these Experiments 1a to 1f, the material of sleeve 5 covering the outer peripheral surface of barrel die 4 was changed variously. Namely, in Experiments 1a to 1f, the relationship between the material of sleeve 5 and the quality characteristics of the obtained shaped product was evaluated The results of these experiments are summarized in Table 1

**[Table 1]**

| | Experiment 1a | Experiment 1b | Experiment 1c | Experiment 1d | Experiment 1e | Experiment 1f |
|---|---|---|---|---|---|---|
| Sleeve material | graphite | SiC | AlN | quartz glass | Al₂O₃ | graphite |
| Light blocking | yes | yes | Yes | no | yes | yes |
| W/m·K | 110 | 150 | 170 | 5 | 20 | 70 |
| Density variation in shaped product | ○ | ○ | ○ | × | × | ○ |

A circular ZnS plate having a diameter of 20 mm and a thickness of 5 mm was formed for the measurement of density in the shaped product shown in Table 1. The relative density with respect to the ZnS density of 4,1 g/cm³ was measured in the circular plate. For the density measurement, the density of a piece cut out at a measurement site from the shaped product was measured by Archimedes' principle.

For the evaluation of density variation in the shaped product, the density difference was evaluated between a central region of 10 mm diameter and 5 mm thickness and a peripheral region other than the central region in the circular plate of the shaped product. When the difference of the relative density of the peripheral region with respect to the relative density of the central region was less than 0,5%, it was assumed that the preform had been uniformly heated and homogeneously sintered in its entirety. The ○ mark is assigned as indicating that the evaluation standard was met. On the other hand, when the density difference was 0.5% or greater, the mark is assigned as indicating that the evaluation standard was not met. In general, the relative density at the peripheral region is liable to become lower as compared to the central region.

As seen from the results in Table 1, every shaped product formed in Experiments 1a to 1e and 1f meets the evaluation standard regarding the density variation in the shaped product. The reason for this is conceivably that each of graphite, SiC and AIN used as the material of sleeve 5 in Experiments 1a to 1c and 1f does not pass the heating light and has a thermal conductivity of 70 W/m·K or greater. In other words, it is considered that the thermal uniformity in the shaping region is improved hy virtue of sleeve 5 absorbing light to generate heat and quickly transferring the heat to barrel die 4 without local heating caused by direct irradiation of core dies 1 and 2 with the heating light passing through quartz glass barrel die 4.

On the other hand, the shaped product formed in Experiment 1d in Table 1 does not meet the evaluation standard regarding the density variation in the shaped product. The reason for this is conceivably that sleeve 5 used in Experiment, 1d is made of quartz glass identical to the material of barrel die 4, which transmits the heating light and has a low thermal conductivity of 5 W/m·K. Namely, it is considered that the heating light is direcly applied to core dies 1 and 2 to cause local heating in Experiment 1d and thus it is not possible to improve the thermal uniformity in the shaping region.

Furthermore, in Table 1, the shaped product formed in Experiment 1e also does not meet the evaluation standard regarding the density variation in the formed product. The reason for this is conceivably that Al₂O₃ used as the material of sleeve 5 in Experiment 1e is opaque but has a low thermal conductivity of 20 W/m·K. In other words, although direct irradiation of core dies 1 and 2 with the heating light can be prevented since sleeve 5 is opaque in Experiment 1e, the low thermal conductivity of sleeve 5 does not contribute to improving the thermal uniformity of barrel die 4. As a result, the thermal uniformity in the shaping region is not improved.

### <Exemple 2>

In Example 2 of the present invention, Experiments 2a to 2f similar to those in Example 1 were carried out. Namely, the material of the sleeve was variously changed in Experiments 2a to 2f. Example 2 differs from Example 1 in that the constituent members of the die assembly shown in Figs. 1 and 2 were changed.

Specifically, barrel die 4 of Example 2 was made of glassy carbon having a thermal expansion coefficient of 2.8 × 10⁻⁶ /°C). This barrel die 4 was formed with a cylindrical inner surface of 19.949 mm in inner diameter.

Paired core dies 1 and 2 were formed of SiC having a thermal expansion coefficient of 4.4 × 10⁻⁶ /°C. The sliding surface of each of these core die was coated with a diamond-like carbon (DLC) film. The cylindrical outer peripheral surface of the core die had an outer diameter of 19.912 mm.

Frame die 6 was formed of SiC having a thermal expansion coefficient of 4.4 × 10⁻⁶ /°C, bending strength of 530 MPa, and an outer diameter of 19.897 mm

Using the die assembly configured as described above, the shaping in each of Experiments 2a to 2fin Example 2 was carried out in a manner similar to that of Example 1, and the results thereof are summarized in Table 2.

**[Table 2]**

| | Experiment 2a | Experiment 2b | Experiment 2c | Experiment 2d | Experime nt 2e | Experiment 2f |
|---|---|---|---|---|---|---|
| Sleeve material | graphite | Sic | AIN | quartz glass | Al₂O₃ | graphite |
| Light blocking | yes | yes | yes | no | yes | yes |
| W/m-K | 110 | 150 | 170 | 5 | 20 | 70 |
| Density variation in shaped | ○ | ○ | ○ | × | × | ○ |

By comparing Table 2 with Table 1 in connection with the density variation in the shaped product, it can be understood that the identical results were chained depending only on the material of sleeve 5, despite changes of the materials of barrel die 4, core dies 1 and 2, and frame die 6. It is therefore understood that the material of sleeve 5 is closely related to improvement of the thermal uniformity in the shaping region of the die assembly.

### <Example 3>

In Example 3 of the present invention, it was attempted to produce a homogenous shaped product in a relatively short takt time. In general, it is apparent that the thermal uniformity of preform 3 becomes higher in the die assembly at the shaping temperature T°C as the heating is conducted moderately over a longer period of time. However, it is also apparent that the longer time for reaching the shaping temperature T°C results in lower production efficiency and higher production costs of the shaped product.

In view of the foregoing Experiments 3a to 3f set forth below were carried out in Example 3 to find out a heating method that can increase the production of efficiency while maintaining the homogeneity in the shaped product. The constituent members of the die assembly in Experiments 3a to 3f were identical to those in Experiment 2a of Example 2, while the heating method was changed variously. The results of these experiments are summarized in Table 3.

**[Table 3]**

| | Experiment 3a | Experiment 3b | Experiment 3c | Experiment 3d | Experiment 3e | Experiment 3f |
|---|---|---|---|---|---|---|
| Heating rate up to 0.85T (°C/sec) | 2 | 2.5 | 5 | 1.5 | 5 | 1 |
| Heating rate from 0.85T up to T (°C/sec) | 1 | 0.5 | 0.4 | 2.5 | 0.1 | 1 |
| Density variation in | ○ | ○ | ○ | × | ○ | ○ |
| Shaping time (20 min. or less) | ○ | ○ | ○ | ○ | × | × |

As shown in Table 3, the heating rate (°C/sec) from a room temperature up to 85% of the shaping temperature T °C and the subsequent heating rate up to the T °C were changed variously in Experiments 3a to 3f. Hereinafter, the heating up to 0.85T °C is referred to as "preliminary heating", the heating from 0. 85T °C to the shaping temperature T °C is referred to as "controlled heating", and the total time of heating is referred to as an "overall heating time". In Example 3, the shaping temperature T °C was specifically 1000°C (refer to Example 1) and thus 0.83T °C means 850°C

Table 3 includes an evaluation item related to the shaping time, in addition to the evaluation item of the density variation in the shaped product. When the overall heating time from a room temperature up to the shaping temperature T°C was 20 minutes or less, it was assumed that the desirable production efficiency of the shaped product was met, and then the ○ mark is assigned in the relevant evaluation item related to the shaping time in Table 3, On the other hand, when the overall heating time was longer than 20 minutes, it was assumed that the desirable production efficiency of the shaped product was not met, and then the × mark is assigned in the relevant evaluation item related to the shaping time.

In Table 3 including the results of the above-described evaluation items, the × mark was assigned to the shaped product formed in Experiment 3d, indicating that the evaluation standard of the density variation in the shaped product was not met. The reason for this is conceivably that the controlled heating rate from 0.85T °C up to the shaping temperature T° C was 2.5 C/sec greater than 2.0 C/sec, leading to nonuniform temperature distribution in the shaping region whereby causing degradation of the homogeneity in the shaped product. As to each of Experiments 3a to 3c, 3e and 3f, on the other hand, the O mark was assigned indicating that the evaluation standard of the density variation in the shaped product was met. The reason for this is conceivably that the controlled heating rate was as moderate as 2.0 °C/sec or less so that the temperature distribution could be uniform in the shaping region and then the homogeneity in the shaped product could be maintained.

As to each of Experiments 3e and 3f, the × mark is assigned indicating that the evaluation standard of the shaping time was not met. In Experiment 3e, the reason for this is that the controlled heating rate was less than 0.2 °C/sec and was so moderate that the overall heating time for reaching the shaping temperature T °C was longer than 20 minutes. In Experiment 3f, the × mark was assigned since the preliminary heating rate from a room temperature up to 0.85T °C was less than 2.0 °C/sec and was so moderate that the overall heating time exceeded 20 minutes.

From the above-described results in Table 3, it can be understood that a heating rate of 2.0 °C/sec or greater is desirable for the preliminary heating up to 0.85T °C, and a. heating rate in a range of 0.2 °C/sec to 2.0 °C/sec is desirable for the controlled heating from 0.85T °C up to the shaping temperature T °C.

### <Example4>

In Example 4 of the present invention, Experiments 4a to 4g similar to those in Example 3 were carried out. Specifically, in Experiments 4a to 4g also, the preliminary heating rate from a room temperature up to 85% of the shaping temperature T °C and the subsequent controlled heating rate up to the shaping temperature T° C were changed variously. In Example 4, a plurality of kinds of die assemblies 4A to 4D set forth below were employed.

### (Die Assembly 4A)

In die assembly 4A, barrel die 4 was formed of Adceram (registered trademark of Taiheiyo Cement Corporation) CS type D3 having thermal expansion coefficient of of Taiheiyo Cement Corporation) D3 having a thermal expansion coefficient of 1.4 ×10⁻⁶ /°C available from Sanyo Ceratec Corporation. Adceram is a composite ceramic including lithium-aluminium silicate (LiAlSi₂O₆) and wollastonite (CaOSiO₂). This barrel die 4 was formed with a cylindrical inner surface of 19.977 mm in inner diameter. The outer periphery of barrel die 4 was covered with a sleeve 5 of SiC having a thermal conductivity of approximately 130 W/m-K.

The pair of core dies 1 and 2 was formed of cemented carbide having a thermal expansion coefficient of 5.0 × 10⁻⁶/°C. The peripheral sliding surfaces of these core dies were formed of diamond. The cylindrical outer peripheral surface of the core die had an outer diameter of 19901 mm.

Frame die 6 was formed of B₄C and had a thermal expansion coefficient of 4.5 × 10⁻⁶/°C, bending strength of 400 MPa, and an outer diameter of 19.895 mm.

### (Die Assembly 4B)

in die assembly 4B, barrel die 4 was made of quartz glass having a thermal expansion coefficient of 5.0 × 10⁻⁷ /°C. This barrel die 4 was formed with a cylindrical inner surface of 20.010 mm in inner diameter. The periphery of barrel die 4 was covered with a sleeve 5 of graphite having a thermal conductivity of approximately 100 W/m-K.

The pair of core dies 1 and 2 was formed of graphite having a thermal expansion coefficient, of 5.5 × 10⁻⁶ /°C. The cylindrical outer peripheral surface of the core die had an outer diameter of 19.891 mm. Frame die 6 was formed of Al₂O₃ and had an outer diameter of 19.766 mm.

### (Die Assembly 4C)

in die assembly 4C, barrel die 4 was made of glassy carbon having a thermal In die assembly 4C, barrel die 4 was made of glassy carbon having a thermal expansion coefficient of 2.8 × 10⁻⁶ /°C. This barrel die 4 was formed with a cylindrical inner surface of 19.974 mm in inner diameter. The periphery or barrel die 4 was covered with a sleeve 5 of AlN having a thermal conductivity of approximately 170 W/m·K.

The pair of core dies and was formed of cemented carbide having a thermal expansion coefficient of 5.0 × 10⁻⁶ /°C. The outer peripheral sliding surface of each of these core dies was coated with a DLC film. The cylindrical outer peripheral surface of the core die had an outer diameter of 19.901 mm. Frame die 6 was formed of zirconia, and had an outer diameter of 19.664 mm.

### (Die Assemby 4D)

In die assembly 4D, barrel die 4 was made of silicon nitride having a thermal expansion coefficient of 3.2 × 10⁻⁶/°C. This barrel die 4 was formed with a cylindrical inner surface of 20.140 mm in inner diameter. The periphery of barrel die 4 was covered with a sleeve 5 of carbon having a thermal conductivity of approximately 70 W/m·K.

The pair of core dies 1 and 2 was formed of silicon carbide having a thermal expansion coefficient of 4.4 × 10⁻⁶/°C. The cylindrical outer peripheral surface of the core die had an outer diameter of 19.900 mm. Frame, die 6 was formed of silicon nitride and had an outer diameter of 20.050 mm.

Table 4 analogous to Table 3 summarizes the results of shaping by using die assemblies 4A to 4C configured as set forth above with various changes in the preliminary heating rate and controlled heating rate, similar to those in Example 3.

**[Table 4]**

| | Experiment 4a | Experiment 4b | Experiment 4c | Experiment 4d | Experiment 4e | Experiment 4f | Experiment 4g | Experiment 4h |
|---|---|---|---|---|---|---|---|---|
| | die assembly 4A | die assembly 4A | die assembly 4B | die assembly 4C | die assembly 4A | die assembly 4B | die assembly 4C | die assembly 4D |
| Heating rate up to 0.85T (°C/sec) | 2 | 2.5 | 4 | 6.5 | 6 | 4 | 1 | 2.5 |
| Heating rate from 0.85T up toT (°C/sec) | 0.2 | 0.5 | 1 | 2 | 2.5 | 0.1 | 0.15 | 0.5 |
| Density variation in shaped product | ○ | ○ | ○ | ○ | × | ○ | ○ | ○ |
| Shaping time (20 min. or less) | ○ | ○ | ○ | ○ | ○ | × | × | ○ |

In Table 4, the shaped product formed in Experiment 4e was assigned the × mark as not meeting the evaluation standard of the density variation in the shaped product. The reason for this is conceivably that the controlled heating rate from 0.85T °C up to the shaping temperature. T°C was 2.5 °C/sec greater than 2.0 °C/sec, leading to nonuniform temperature distribution in the shaping region whereby causing degradation of the homogeneity in the shaped product. As to Experiments 4a to 4d and 4f to 4h, the ○ mark was assigned indicating that the evaluation standard of the density variation in the shaped product was met. The reason for this is conceivably that the controlled heating rate was as moderate as 2.0 °C/sec or less so that the temperature distribution could be uniform in the shaping region and then the homogeneity in the shaped product could be maintained.

As to Experiments 4f and 4g the × mark was assigned indicating that the evaluation standard of the shaping time was not met. In Experiment. 4f the reason for this is that the controlled heating rate was less than 0.2°C /Sec and was so moderate that the overall heating time for reaching the shaping temperature T°C was longer than 20 minutes. In Experiment 4g, the × mark was assigned since the preliminary heating rate from a room temperature, up to 0.85T °C was less than 20 °C/sec and was so moderate that the overall heating time exceeded 20 minutes.

From the above-described results in Table 4, it can be understood that a heating rate of 20 °C/sec or greater is desirable for the preliminary heating up to 0.85T °C and a heating rate in a range of 0.2 °C/sec to 2.0 °C/Sec is desirable for the controlled heating from 0.85T °C up to the shaping temperature T °C, irrespective of the constituent members of the die assembly.

### <Summary of Examples>

As can be seen from various Experiments 1a to 1f and Experiments 2a to 2f it is desirable that sleeve 5 covering the outer peripheral surface of barrel die 4 in the die assembly does not transmit the heating and has a good thermal conductivity. Specifically, if sleeve 5 does not transmit heating light having a wavelength of 5 µm or less, it is possible to prevent the shaping region from being directly and locally heated by the heating right. On the other hand, when sleeve 5 has a thermal conductivity of 70 W/m·K or greater, it is possible to quickly and uniformly transfer heat generated by absorption of the heating light to barrel die 4 and then possible to improve the thermal uniformity in the shaping region.

Further, it is understood from various Experiments 3 a to 3f and Experiments 4a to 4h that, in the method of producing a shaped product by using the die assembly of the present invention, it is desirable to heat the preform at the preliminary heating rate of 20 °C/sec or greater up to 85% of the temperature T °C at which the preform is pressed, and then at the controlled heating rate in a range of 0.2 °C/Sec to 2.0 °C/sec from 85% of the temperature T °C up to the T °C. By satisfying these conditions of the heating rates, good production efficiency can be achieved with maintaining the homogeneity in the shaped product.

In the meantime, it is preferable that barrel die 4 is made mainly of a material having a thermal expansion coefficient of 3.5 10⁻⁶ u or less. This is because, if the barrel die has a large coefficient of thermal expansion, the clearance between the outer peripheral surface of the core die and the inner circumferential surface of the barrel die will become larger at the shaping temperature T °C, and this tends to cause deterioration in the concentricity.

By utilizing the difference in thermal expansion the pair of core dies I and 2 and barrel die 4, it is possible to keep the concentricity high at the shaping temperature T °C, If the outer diameter of core dies 1 and 2 becomes larger than the inner diameter of barrel die 4 as a result of thermal expansion, a shrink-fitted state is caused leading to significant reduction in the of the core dies. It is therefore desirable 1 to keep the clearance of 5 µm or greater between the outer periphery surfaces of core dies 1 and 2 and the inner circumferential surface of barrel die 4 at the shaping temperature T °C.

Considering the effect of thermal expansion set forth above, in the case that the barrel die has a cylindrical inner surface of D₁ (mm) in diameter and the core die has a cylindrical outer peripheral surface of D₂ (mm) in diameter, and the thermal expansion coefficients of the barrel die and core die are α₁ (/°C) and α₂ (/°C) respectively at the temperature T (°C) at which the preform is pressed, it is preferable to the relationships of α₁ < α₂ and 0.030 ≥ (α₁D₁ - α₂D₂ ΔT + (D₁- D₂) ≥ 0,005, where ΔT is the difference between the pressing temperature T (°C) and a room temperature (°C).

In addition, a clearance is similarly required between the outer peripheral surface of frame die 6 and the inner circumferential surface of barrel die 4. It is noted that the frame die is used for positioning of preform 3 and is made of a material of high strength (bending: strength). Since occurrence of a shrink-fitted state between frame die 6 and die 4 adversely affects the durability of the barrel die, it is preferabe to provide a relatively larger clearance or 15 µm or greater between the outer peripheral surface of frame die 6 and the inner circumferential surface of barrel die 4.

Namely, in the case that the barrel die has a cylindrical inner surface of D₁ (mm) in diameter and the frame die has a cylindrical outer peripheral surface of D₃ (mm) in diameter, and the thermal expansion coefficients of the barrel die and frame die are α₁ (/°C) and α₃ (/°C) respectively at the temperature T (°C) at which the preform is pressed, it is preferable to satisfy the relationships of α₁ < α₃ and 0.150 ≥ (α₁D₂-α₃D₃) ΔT + (D₁₋D₃) ≥ 0.015, where ΔT is the difference between the pressing temperature T (°C) and a room temperature (°C).

Since frame die 6 is subjected to lateral pressure caused from the shaping force, its bending strength is critical. It is preferable that frame die 6 has bending strength of 300 MPa or greater. Each frame die 6 used in the various experiments set forth above could have this strength.

The edge formed by the sliding surface and the pressing face in each of core dies 1 and 2 was R-chamfered or C-chamfered by at least it 0,2 mm. The chamfering is provided to prevent galling and biting between the pair of core dies 1 and 2 and the inner circumferential surface of barrel die 4.

### INDUSTRIAL APPLICABILITY

Since the die assembly of the present invention includes the barrel die of which the outer peripheral surface is covered with the sleeve that does not transmit light having a wavelength of 5 µm or shorter and that has a thermal conductivity of 70 W/m·K or greater, the thermal uniformity in the shaping region can be improved making it possible to produce a shaped product of high homogeneity.

## Claims

1. A die assembly comprising:
a barrel die (4) having a tubular inner surface,
a sleeve (S) covering an outer peripheral surface of said barrel die, and
a pair of core dies (1, 2) for pressing a preform (3) inside the tubular inner surface of said barrel die, at least one of the paired core dies being slidable and guided along the tubular inner surface of said barred die,
wherein said sleeve (5) does not transmit light having a wavelength of 5 µm or shorter and has a thermal conductivity of 70 W/m·K or greater.

2. The die assembly according to claim 1, wherein said sleeve (5) is formed mainly of any of graphite, SiC and AlN.

3. The die assembly according to claim 1, wherein
said barrel die (4) has a cylindrical inner surface, of D₁ (mm) in diameter, and said core die (1, 2) has a cylindrical outer surface of D₂ (mm) in diameter,
said barred die and said core die have thermal expansion coefficients of α₁ (/°C) and α₂(/°C), respectively, at a temperature T (°C) at which said preform is pressed, and
relationships of α₁ <α₂ and 0.030 ≥ (α₁D₁- α₂D₂)·ΔT + (D₁-D₂) ≥ 0.005 are satisfied, where ΔT is a difference between the pressing temperature T and a room temperature (°C).

4. The die assembly according to claim 1, further comprising a frame die (6) for surrounding a rim of said preform (3) inside the tubular inner surface of said barrel die (4).

5. The die assembly according to claim 4, wherein
said barrel die (4) has a cylindrical inner surface of D₁ (mm) in diameter, and said frame die (6) has a cylindrical outer surface of D₃ (mm) in diameter,
said barrel die and said frame die have thermal expansion coefficients of α₁ (/°C) and α₃ (/°C), respectively , at a temperature T (°C) at which said preform is pressed, and
relationships of α₁ < α₃ and 0.150 ≥ (α₁D₁- α₃D₃)·Δt + (D₁-D₃) ≥ 0.015 are satisfied, where ΔT is a difference between the pressing temperature T and a room temperature (°C).

6. The die assembly according to claim 1, wherein said barrel die (4) is formed mainly of a material having a thermal expansion coefficient of 3.5 × 10⁻⁶ or less

7. The die assembly according to claim 6, wherein said barrel die (4) is formed mainly of quartz glass or silicon nitride.

8. The die assembly according to claim 1, wherein a sliding surface of said core die (1, 2) is formed of any of graphite, glassy carbon, DLC, and diamond.

9. The die assembly according to claim 4, wherein said frame die (6) is formed mainly of a ceramic material having a bending strength of 300 MPa or greater.

10. The die assembly according to claim 9, wherein said frame die (6) is formed mainly of any of silicon carbide, silicon nitride, alumina, B₄C, and zirconia.

11. The die assembly according to claim 1, wherein an edge portion formed by a sliding surface and a pressing face of said core die (1, 2) is R-chamfered or C-chamfered by at least 0.2 mm.

12. A shaping method for producing a shaped product by using the die assembly of claim 1, comprising the steps of heating the preform (3) at a heating rate of 2.0 °C/sec or greater up to 85% of a temperature T °C at which said preform is pressed, and then heating the preform from 85% of the temperature T °C up to the T °C at a heating rate in a range of 0.2 °C/sec to 2.0 °C/sec.
